# EUROPEAN PATENT SPECIFICATION

(11) **EP 3 329 095 B1**
(45) Date of publication and mention of the grant of the patent: **25.08.2021**
(21) Application number: 16730033.4
(22) Date of filing: 31.03.2016
(51) Int. Cl.: E21B 47/135, H04B 10/2587

(54) **A WELLBORE FIBRE OPTICAL COMMUNICATION SYSTEM**
BOHRLOCHGLASFASERKOMMUNIKATIONSSYSTEM
SYSTÈME DE COMMUNICATION DE PUITS DE FORAGE À FIBRE OPTIQUE

(30) Priority: 29.07.2015 GB 201513311
(43) Date of publication of application: 06.06.2018
(73) Proprietor: Bergen Technology Center AS, 5160 Laksevag (NO)
(72) Inventor: HELLEVANG, Jon Oddvar, 5099 Bergen (NO); THOMAS, Peter James, 5231 Paradis (NO); LIE, Terje Lenart, 5264 Garnes (NO); FRANTZEN, Dag-Håkon, 5176 Loddefjord (NO); ANDERSEN, Gunnar, 5174 Mathopen (NO)
(74) Representative: Acapo AS
(86) International application number: PCT/NO2016/050058
(87) International publication number: WO 2017/018885

(56) References cited:
- EP-A1- 2 744 125
- WO-A1-2015/065479
- US-A1- 2011 290 992
- US-A1- 2014 175 271
- US-A1- 2014 205 301

## Description

### Field of the invention

The invention relates to a wellbore fibre optical communication system that enables transfer of high data rates from a remote and/or inaccessible location at high temperature e.g. downhole oilfield to a surface location using optical fibre.

### Background art

There is need for data transfer from remote and/or inaccessible locations at high temperature, such as downhole applications in oilfield and geothermal wells, to a surface location. More advanced downhole measurement equipment requires high bandwidth telemetry data transfer systems. Current electrical telemetry data transfer systems have limited bandwidth, typically, less than Mbps. Local data processing can be used to reduce the amount of data which needs to be transferred, but this will lower the data quality.

Local storage is difficult for very high data volumes and it eliminates the possibility for real time online monitoring. Fibre optical communication techniques enable high data rate communication over long distances. A key challenge with e.g. downhole measurement and logging is the high temperature in the well. High temperature can also be a challenge in many industry process-monitoring applications.

From prior art one should refer to US patent application US2006/0152383, US7,515,774 and US7,929,818. A challenge with these concepts is the use of complex and temperature sensitive optical components downhole. Another challenge is ensuring
correct polarisation state of the light to achieve fast and reliable modulation, which is required to achieve high bandwidth.

US5654818 discloses a polarisation independent electro-optical modulator. However, that solution is more complex compared to a standard modulator.

US2004/0208614 shows a system for producing and utilising orthogonal optical data signals. US4,547,774 and US2014/0175271 are examples of systems with electrooptical interfaces in the well. US2011/0290992 describes a system of optical
measurements for wellbore survey comprising an optical measurement apparatus optically coupled to one end of the light conveyable cable and deployed inside the well bore, wherein the optical measurement apparatus is configured to measure a rotation rate. US2014/0205301 describes a modulation unit for a quantum communication system.

US patent US4849753A and international application WO2015/065479A1 describe various methods and solutions for downhole optical communication in general and electro-optical modulators, considered to be prior art. EP2744125A1 discloses a signal transmitting/receiving method and a passive optical network device.

The different types of optical modulators known in prior art are described in various documents, such as in RP photonics: http://www.rpphotonics.com/optical_modulators.html.

### Short summary of the invention

The main objective of the present invention is to provide a high bandwidth wellbore fibre optical communication system for high temperature applications. The system allows for data from logging tool(s) and/or permanently installed monitoring/measurement unit(s) to be transmitted to a receiving station or local device for recording and analysis of the data. High bandwidth will enable use of more advanced monitoring solutions, faster logging operations i.e. increased line speed, and avoid data degeneration caused by date reduction.

The objective is achieved according to the invention by a wellbore fibre optical communication system according to claim 1.

The use of the polarisation beam splitter/combiner in combination with an optical modulator ensures a constant optical power of the modulated polarisation state through the optical modulator, independent of the input polarisation state. This ensures consistence modulation depth, as the light will travel through the modulator one way or the other.

In an advantageous embodiment the rotated first light signal and the un-rotated second light signal are provided on respective first and second optical modulator ports of the optical modulator, and the wellbore fibre optical communication system is arranged for optical interconnection and transfer of a modulated optical signal from said optical modulator to said optical receiver.

The modulated light will then be a combination of light that have gone through the modulator in both directions, as the light polarisation will change continuously after traveling through long lengths in single mode optical fibre.

In a further advantageous embodiment, the local device comprises an optical receiver and an optical circulator, the optical circulator is connected to the light source, the optical receiver, and a first end of a common optical fibre, wherein the first optical circulator is configured for guiding light from the light source into the common optical fibre and for guiding light from the common optical fibre to the optical receiver, wherein a second end of the common optical fibre is connected to the polarization beam splitter,
wherein the beam splitter is also an optical combiner arranged for combining incoming optical signals on the first and second ports into the common optical fibre.

This same configuration thus enables the modulated light to be recombined into the same optical fibre, such that it is sufficient to use a standard single-mode optical fibre in the cable between the remote end and receiving end.

Optical light sources typically perform poorly at high temperature and under temperature variations. In the disclosed invention no optical light sources are located at the high temperature remote location with the logging tool(s)/measurement unit(s). The system only requires two simple optical components to be located in the remote and inaccessible locations at elevated temperature. The telemetry data transfer system can transmit at a high data rate (> 100Mbps) at high temperature (> 177°C) over a single optical fibre. The system may use standard optical fibre, which makes it compatible with standard multiplexing architectures for adding further sensing and communication capabilities. The same optical fibre can simultaneously be used for telemetry data transfer and distributed fibre optical sensing.

When required the solutions can include a downlink for sending commands to the logging tool(s)/measurement unit(s). The optical fibre used for communication can simultaneously be used for fibre optical sensing along the fibre's entire length providing valuable information in addition to the data obtained from the logging tool(s)/measurement unit(s).

### Figure captions

The above and further features of the invention are set forth with particularity in the appended claims and together with advantages thereof will become clearer from consideration of the following detailed description of embodiments of the invention given with reference to the accompanying drawings, wherein:
Figure 1 illustrates in a block diagram a first embodiment of the invention.
Figure 2 illustrates in a block diagram a second embodiment of the invention.
Figure 3 illustrates in a block diagram a third embodiment of the invention.
Figure 4 illustrates in a block diagram a fourth embodiment of the invention with downlink control.
Figure 5 illustrates in a block diagram a fourth embodiment of the invention with fibre optical sensing.

Please also see parts list with reference numbers at the end of the description.

### Embodiments of the invention

The invention will in the following be described and embodiments of the invention will be explained with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure.

For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

The invention is a wellbore fibre optical communication according to claim 1.

A cable containing at least one optical fibre is installed between a remote communication unit remote device (410) and receiving station or a local device (210). High temperature capability is ensured by placing all light sources at the receiving end of the system. A light source emits light traveling along the optical fibre towards the remote device, where it is divided into two beams depending on light polarisation, using a polarisation beam splitter (411).

In an embodiment the rotated first light signal and the un-rotated second light signal are provided on respective first and second optical modulator ports (431, 432) of the optical modulator (412).

In a related embodiment, the local device (210) comprises further an optical receiver (212) and an optical circulator (213), the optical circulator (213) is connected to the light source (211), the optical receiver (212), and a first end of a common optical fibre (240), wherein the first optical circulator (213) is configured for guiding light from the light source (211) into the common optical fibre (240) and for guiding light from the common optical fibre (240) to the optical receiver (212), wherein a second end of the common optical fibre (240) is connected to the polarization beam splitter (411), wherein the beam splitter (411) is also an optical combiner arranged for combining incoming optical signals on the first and second ports (421, 422) into the common optical fibre (240).

In this embodiment, by combining the polarisation beam splitter/combiner with an optical modulator one is able to secure robust and good modulation depth and high data bandwidth independent of input light polarisation and other conditions. The information from the remote logging tool(s)/measurement unit(s) are coded onto the optical signal using the optical modulator. Light goes through the optical modulator in both directions, and is re-combined to a single optical fibre using the same polarisation beam splitter/combiner. Data in form of modulated light is transmitting back on the same optical fibre to the receiving equipment for decoding, storage and monitoring.

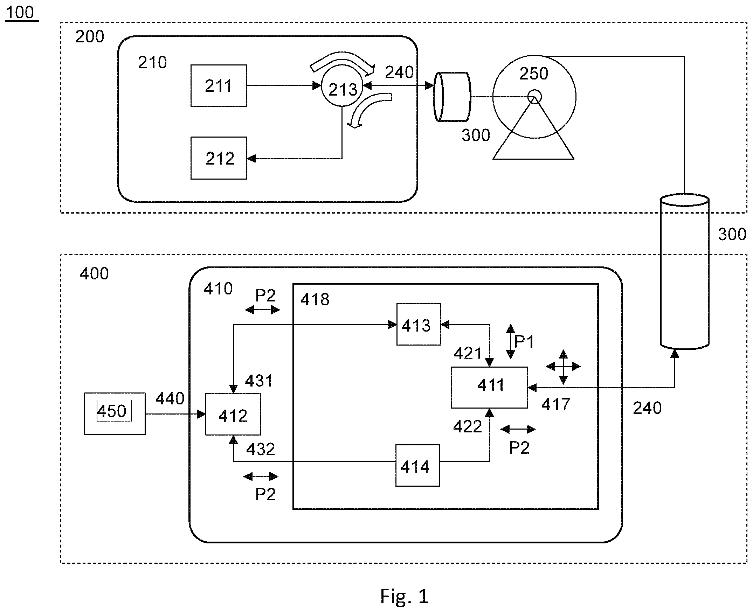

Figure 1 shows a typical embodiment of a fibre optical communication system (100) used to obtain data from logging tool(s)/measurement unit(s) (450) in a remote or inaccessible locations (400) e.g. down hole in any water, oil and gas and geothermal well at high temperatures.

The fibre optical communication system (100) composing a local device 210, connected to a remote device (410) via a cable (300) containing at least one optical fibre.

The local device (210) comprises; a light source 211, an optical receiver (212) and an optical circulator 213. The local device is connected to a cable reel (250) via an optical fibre 240.

The remote device (410) contains a polarisation beam splitter/combiner (411) connected by one polarisation-rotating element (413) and one polarisation maintaining element (414) to an optical modulator (412), which modulates/supports one polarization state preferentially. The remote device (410) is connected to one or more logging tool(s)/measurement unit(s) (450) who send their recorded data to the local device of the disclosed data transfer system.

The invention will be further described in connection with exemplary embodiments, which are schematically shown in the drawings, wherein Figure 1 shows a typical embodiment of a fibre optical communication system (100) used to obtain data from a logging tool(s)/measurement unit(s) (450) in a remote or inaccessible location (400), e.g. downhole in any water, oil and gas and geothermal well at high temperatures.

A light source (211) is placed in the local device (210) in the operator environment (200) e.g. surface location. The optical circulator (213) is used to guide the light from the light source (211) into the cable (300) to the remote device 410, and back to the optical receiver (212).

Light from the light source (211) is divided into two branches, one polarisation rotating element (413) and one polarisation maintaining element (414) by using a polarisation beam splitter/combiner (411). The two elements (413) and (414) are connected to an optical modulator (412), such that the input polarisation states to the modulator are equal to the modulated/supported polarisation state and are counter propagating with respect to one another.

The signals from the logging tool(s)/measurement unit(s) (450) are coded onto the data transfer system using an electrical cable (440) on the optical modulator's (412) electrical input. The coded optical signal is re-combined using the same polarization beam splitter/combiner (411) and light travels back the cable (300) to the optical receiver (212), where it is decoded, stored and interpreted for the use of monitoring and/or analysis. A cable reel (250) can be used to move the cable (300) with the remote device (410) and logging tool(s)/measurement unit(s) in and out of the remote and/or inaccessible location (400).

The invention disclosed in this patent enable high bandwidth fibre optical data transfer system from a remote or inaccessible location (400) typically at elevated temperature, without having to place any light source in the remote location (400). The remote device (410) can be operated using one standard single-mode optical fibre in the cable (300). The light source (211) will typically be continuous wavelength (CW).

The wavelength for the light source (211) must be selected in an area supported by the other optical components, (212, 213, 240, 250, 300, 411, 412, 413, 414, 419 and 463) as well as other optical components used in the system. This system will typically allow for any wavelength between about 1510-1590 nm.

Figure 1 also shows the light polarisation at different fibre locations throughout the remote device 410. If using e.g. single mode fibre, the polarisation state of the light from the light source (211) will change fast with time and location in the cable (300). This is represented by a combination of vertical and horizontal polarised light on a third port (417) of the polarisation beam splitter/combiner (411), i.e the interface between the cable (300) and the polarisation beam splitter/combiner (411).

The polarisation beam splitter/combiner (411) can be a prism where the third port (417) containing a combination of both polarisations is connected to the cable (300).

The two other ports on the polarisation beam splitter/combiner (411) are connected respectively to one polarisation-maintaining element (414), preferably a polarisation maintaining optical fibre, and a polarisation-rotation element (413). One embodiment of implementing the polarisation-rotation element (413) is by using a polarisation maintaining optical fibre from both the polarization beam splitter/combiner (411) and the optical modulator (412) and connect/splice these together with a 90 degree rotational offset.

A half wave plate and polarisation maintaining optical fibre can be another embodiment.

Figure 1 shows how the light from the light source (211) will be split into two orthogonal polarisations, one traveling towards (413) and the other towards (414). The light polarisation in (413) is rotated by 90 degrees, such that the light polarisation into the optical modulator (412) is equal from both directions (413) and (414), and both are aligned with the axis modulated/supported by the optical modulator (412). In this illustration, the optical modulator (412) is modulating/supporting horizontal polarized light.

Light out of the optical modulator (412) will be recombined in the polarisation beam splitter/combiner (411) into the same optical fibre in the cable (300). The modulated light will be a combination of vertical and horizontal polarised light traveling towards the optical receiver (212). In this way, all the light is modulated securing good modulation depth and signal independent of input polarisation state. The two returning light waves will not interfere with each other and the optical receiver (212) will detect them as a single signal since they are orthogonal.

The recorded data from the logging tool(s)/measurement unit(s) (450) are modulated/coded onto the system using an electrical cable (440) connected to the electrical input of the optical modulator (412).

The modulated signal from the remote device (410) is transmitted to the optical receiver (212) in the receiving unit (210). The optical receiver (212) includes clock recovery and decoding of the signal, so it can be stored and made available for monitoring and analysis.

A cable reel (250) can be used to move the remote device (410) and associated logging tool(s)/measurement unit(s) (450) in and out of the environment of interest 400. A fibre optical rotary joint can be placed in the cable reel (250) to enable continuously communication while operating/running the reel during logging operations.

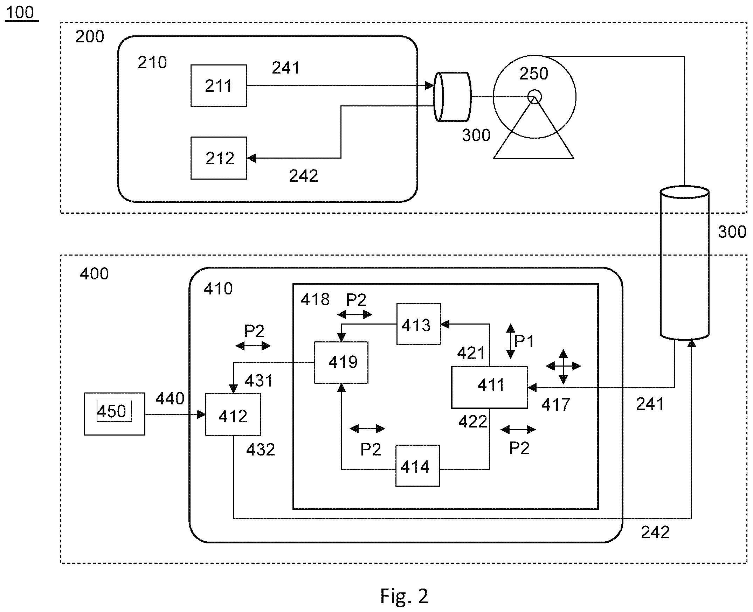

In a second embodiment illustrated in Fig. 2, the wellbore fibre optical communication system (100) comprises an optical coupler (419) arranged for combining the rotated first light signal and the un-rotated second light signals into a combined light signal, and providing the combined light signal to a modulator first optical port (431) of the optical modulator (412).

The local device (210) may comprises an optical receiver (212) arranged for optical interconnection via an optical fibre with a modulator second optical port (432) of the optical modulator (412) .

In a related embodiment, the polarization beam splitter (411) is interconnected with the light source (211) via a first optical fibre (241), and the optical receiver (212) is interconnection with the modulator second optical port (432) via a second optical fibre (242).

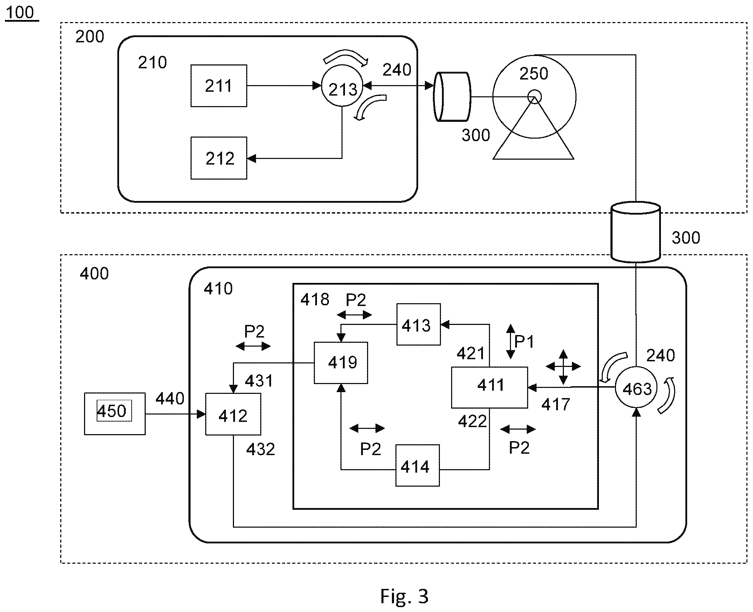

In a third main embodiment illustrated in Fig. 3, the local device (210) comprises a first optical circulator (213) connected to the light source (211), the optical receiver (212), and a first end of a common optical fibre (240), wherein the first optical circulator (213) is configured for guiding light from the light source (211) into the common optical fibre (240) and for guiding light from the common optical fibre (240) to the optical receiver (212).

In a related embodiment, the remote device (410) comprises a second optical circulator (463) connected to the polarization beam splitter (411), the modulator second optical port (432) and a second end of the common optical fibre (240), wherein the second optical circulator (463) is configured for guiding light from the modulator second optical port (432) into the common optical fibre (240) and for guiding light from the common optical fibre (240) into the polarization beam splitter (411).

In all the embodiments above, the polarization control means (418) comprises a polarization maintaining element (414) connected to the second port (422) and configured for maintaining the second polarization (P2) of the second light signal.

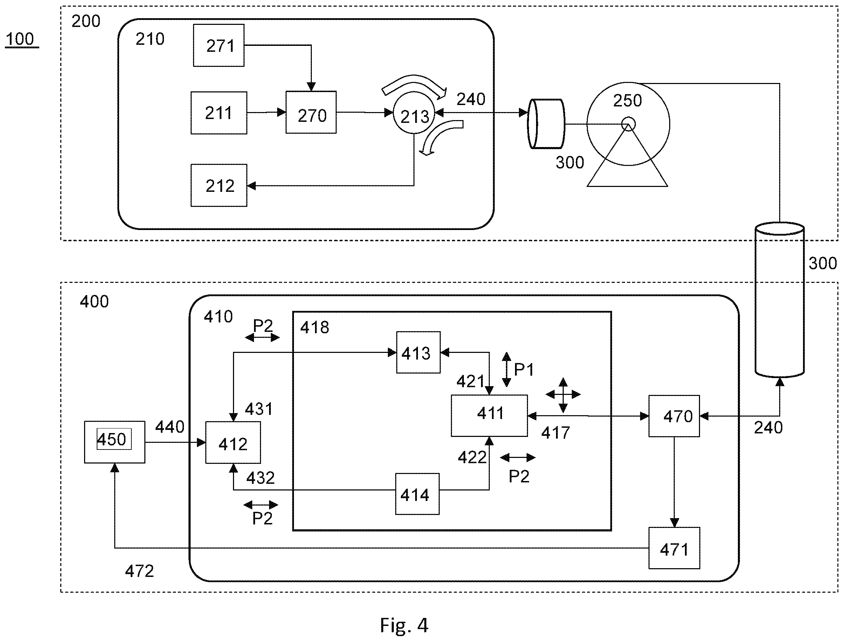

The first and second polarizations (P1, P2) are used to describe the polarization of an optical signal in the remote device. The light signal in the first and second polarization orientations (P1, P2) can be unmodulated or modulated. Light signals input to the optical modulator are in general unmodulated, while light signals output from the optical modulator in general are modulated. In the embodiments shown in Fig. 1 and 4, the light with second polarization (P2) is input and output on both the modulator first and second optical ports (431 and 432), and there will therefore be both unmodulated and modulated light with second polarization (P2) on both ports.

In the embodiments illustrated in Fig. 2 and 3 there will be unmodulated light with second polarization (P2) on the modulator first optical port (431) and modulated light with second polarization (P2) on the modulator second optical port (431).

Standard single mode optical fibre can be used for the data transfer system. This allows for a variety of fibre optical sensing technologies to be used simultaneously on the same optical fibre as the data transfer system. One embodiment includes wavelength division multiplexing (WDM) in the operator environment (200) to ensure that the optical signal from the fibre optical communication system (100) is not interfering with any fibre optical sensing system even if the same optical fibre is used for both communication and sensing.

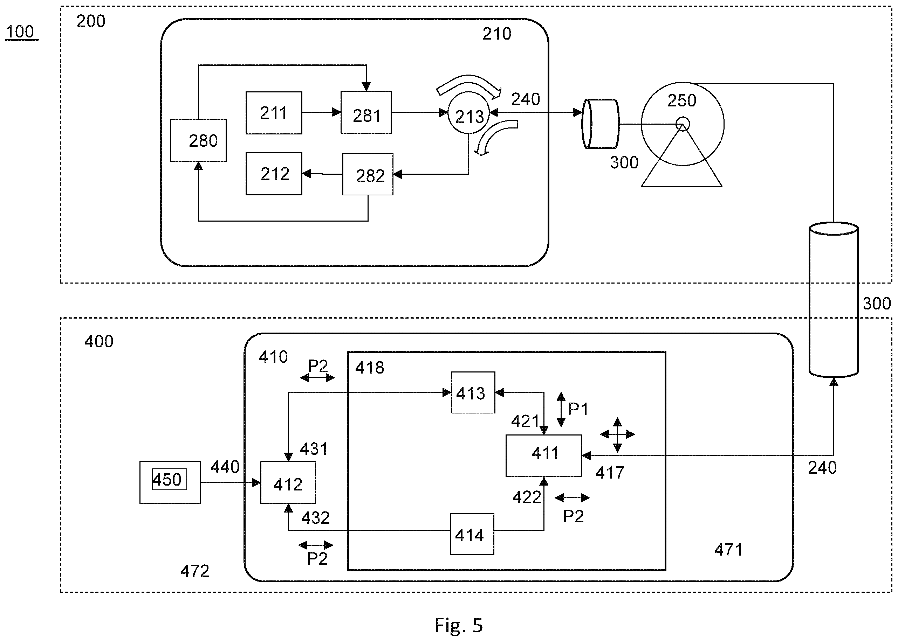

In this embodiment, illustrated in Fig. 5, the local device (210) comprises a fibre optical sensing unit (280), a sensing transmit WDM (281) and a sensing receive WDM (282), wherein the sensing unit (280) is arranged for transmitting a first optical signal to the remote device (410) along an optical fibre, e.g. the common optical fibre (240) in Fig. 1, and further receiving the back reflected optical signal along/from an optical fibre via the receive WDM (282), wherein the optical sensing unit (280) is further arranged for analysing the received optical signal compared to a sent first optical signal. By doing so the optical sensing unit (280) can measure various parameters along the entire length of the optical fibre, at the same time as the fibre is used for downhole communication. A topside monitoring/control system (490) can be used to control the behaviour and the sensing of the fibre optical sensing unit (280).

The system allows for all form of distributed fibre optical sensing technologies such as, but not limited to, temperature (DTS), strain and temperature (DTSS), acoustic (DAS), as well as point and array sensing using fibre Bragg gratings (FBG) to be used on the same optical fibre in the cable (300) simultaneously with the data transfer system (100). Another embodiment of fibre optical sensing is using one or more separate optical fibres in the cable (300).

The fibre optical communication system can also be used for downlink communication. In an embodiment illustrated in Figure 4, the system comprises WDM components to control the logging tool (450). More specifically the local device (210) comprises a local WDM (270) and a downlink light source (271), and the remote device (410) comprises a remote WDM (470) and a downlink optical receiver (471). The downlink light source (271) has a different wavelength than the light source (270), and the two wavelengths are multiplexed into the common fibre (240) in the local WDM (270). In the remote WDM (470), the two wavelengths are de-multiplexed and the downlink optical signal is sent to the downlink optical receiver (471) where it is converted to an electric downlink signal (472). This electric signal can control the logging tool (450), or any other tool in the wellbore.

As an alternative embodiment the remote device (410) can use e.g. a wavelength division multiplexing or an optical coupler connected to a dedicated downlink optical receiver (471). Yet another alternative is to use a build-in optical detector in the optical modulator (412), where available, preferably with a separate light source as downlink light source (271).

Wavelength division multiplexing can also be used in the remote or inaccessible location (400) to address more than one logging tool/measurement in unit (450).

Optical communication with more than one downhole node is possible using e.g. WDM in the well. Each node can then be identified by its wavelength, and will have separate light sources (211) and optical receivers (212) adapted to the specific wavelength.

Communication with several nodes, such as logging tools/measurement units can also be achieved using a single fibre optical node and electrical communication to one joint/shared electrical unit connected to the electric cable (440). The nodes can then be addressed according to well-known data networking principles.

The optical receiver (212) can include data quality check, and a feedback loop to the remote device (410). This can be used to ensure good data transmission quality under changing operational conditions. For instance the bias voltage (Vbias) on the optical modulator (412) be adjusted to optimise the modulation and data quality.

The fibre optical communication system (100) can be used both in logging and for permanently installed equipment. For the last case the cable reel does not need to be part of the system during operation.

Power for the logging tool(s)/measurement unit(s) (450) can be provided having electrical wires in the cable (300), power in a separate cable, or by utilising local power from e.g. batteries. The cable (300) can also be used to send commands to the logging tool(s)/measurement unit(s) (450) either by electrical or optical signals.

The optical modulator can be based on any kind of modulation techniques known from prior art, such as acousto-optic or electro-optic modulation, wherein the incoming signal is used to modulate the light signal, by using e.g. phase modulation or intensity modulation. In an embodiment the optical modulator is an electro-optical modulator based on Mach-Zehnder interferometer using titanium in diffused LiNbQ3 crystal.

The invention according to the application finds use in applications where large amounts of data are to be transmitted from logging tool(s)/measurement unit(s) located in a remote and/or inaccessible location to a local device. The system is well suited for high temperature applications such as downhole hydrocarbon and geothermal energy wells. The system can also be used in the process industry and other applications with the same challenges.

**Parts list with reference numbers**

| | |
|---|---|
| **100** | Fibre optical communication system |
| **200** | Operator environment (e.g. surface location) |
| **210** | Local device |
| **211** | Light source |
| **212** | Optical receiver |
| **213** | First optical circulator |
| **240** | Common optical fibre |
| **241** | First optical fibre |
| **242** | Second optical fibre |
| **250** | Cable reel |
| **270** | Local Wavelength Division Multiplexer, Local WDM |
| **271** | Downlink light source |
| **280** | Fibre optical sensing unit |
| **281** | Sensing transmit WDM |
| **282** | Sensing receive WDM |
| **290** | Topside monitoring/control system |
| **300** | Cable with optical fibre |
| **400** | Remote and/or inaccessible location (e.g. downhole at high temperature) |
| **410** | Remote device |
| **411** | Polarisation beam splitter/combiner |
| **412** | Optical modulator |
| **413** | Polarisation-rotating element |
| **414** | Polarisation-maintaining element |
| **417** | Third port of polarization beam splitter/combiner. A combination of horizontal and vertical polarised light |
| **418** | Polarization control means |
| **419** | Optical coupler |
| **421** | First port of polarization beam splitter/combiner. Light with first polarization, e.g. vertical |
| **422** | Second port of polarization beam splitter/combiner. Light with second polarization, e.g. horizontal |
| **431** | Modulator first optical port |
| **432** | Modulator second optical port |
| **440** | Electrical cable |
| **450** | Logging tool(s)/measurement unit(s) (equipment for monitoring) |
| **463** | Second optical circulator |
| **470** | Remote Wavelength Division Multiplexer, Remote WDM |
| **471** | Downlink optical receiver |
| **472** | Downlink electric signal |
| **PI** | Light with first polarization, e.g. vertical. |
| **P2** | Light with second polarization, e.g. horizontal |

## Claims

1. A wellbore fibre optical communication system (100) comprising;
- a remote device (410) configured to be arranged in a wellbore, and
- a local device (210) configured to be arranged above said wellbore, said local device (210) comprising a light source (211) and an optical receiver (212), wherein said remote device (410) comprising
- an optical modulator (412), and
- a polarization control means (418) comprising
- a polarization beam splitter (411) arranged for optical interconnection with said light source (211) via an optical fibre (240) and configured for splitting incoming light from said light source (211) into first and second light signals with respective first and second orthogonal polarizations (P1, P2) output to respective first and second ports (421, 422), and
- a polarization rotation element (413) connected to said first port (421) and configured for rotating said first light signal to said second polarization (P2),
- a polarization maintaining element (414) connected to said second port (422) and configured for maintaining the polarization (P2) of the second light signal un-rotated,
wherein said polarization control means (418) is further configured for providing both said rotated first light signal and said un-rotated second light signal as input light signals to said optical modulator (412), said optical modulator (412) arranged for receiving a measurement signal on an electrical cable (440) from a downhole logging tool (450) and modulating said measurement signal forming a modulated optical signal, and said wellbore fibre optical communication system (100) is arranged for optical interconnection and transfer of said modulated optical signal from said optical modulator (412) to said optical receiver (212).

2. The wellbore fibre optical communication system (100) according to claim 1, wherein said rotated first light signal and said un-rotated second light signal are provided on respective first and second optical modulator ports (431, 432) of said optical modulator (412).

3. The wellbore fibre optical communication system (100) according to claim 2, wherein said local device (210) comprises an optical circulator (213) that is connected to said light source (211), said optical receiver (212), and a first end of a common optical fibre (240), wherein said first optical circulator (213) is configured for guiding light from said light source (211) into said common optical fibre (240) and for guiding light from said common optical fibre (240) to said optical receiver (212), wherein a second end of said common optical fibre (240) is connected to said polarization beam splitter (411), wherein said beam splitter (411) is also an optical combiner arranged for combining incoming optical signals on said first and second ports (421, 422) into said modulated optical signal on said common optical fibre (240).

4. The wellbore fibre optical communication system (100) according to claim 1, comprising; an optical coupler (419) arranged for combining said rotated first light signal and said un-rotated second light signals into a combined light signal, and providing said combined light signal to a modulator first optical port (431) of said optical modulator (412).

5. The wellbore fibre optical communication system (100) according to claim 4, wherein said optical receiver (212) is arranged for optical interconnection via an optical fibre with a modulator second optical port (432) of said optical modulator (412), to transfer said modulated optical signal on said modulator second optical port (432) to said optical receiver (212).

6. The wellbore fibre optical communication system (100) according to claim 5, wherein the polarization beam splitter (411) is interconnected with said light source (211) via a first optical fibre (241) and said optical receiver (212) is interconnection with said modulator second optical port (432) via a second optical fibre (242).

7. The wellbore fibre optical communication system (100) according to any of the claims 4 to 6, wherein said local device (210) comprises a first optical circulator (213) connected to said light source (211), said optical receiver (212), and a first end of a common optical fibre (240), wherein said first optical circulator (213) is configured for guiding light from said light source (211) into said common optical fibre (240) and for guiding light from said common optical fibre (240) to said optical receiver (212).

8. The wellbore fibre optical communication system (100) according to claim 7, wherein said remote device (410) comprises a second optical circulator (463) connected to said polarization beam splitter (411), said modulator second optical port (432) and a second end of said common optical fibre (240), wherein said second optical circulator (463) is configured for guiding light from said modulator second optical port (432) into said common optical fibre (240) and for guiding light from said common optical fibre (240) into said polarization beam splitter (411).

9. The wellbore fibre optical communication system (100) according to any of the claims above, wherein the optical modulator (412) is an electro-optical modulator.

10. The wellbore fibre optical communication system (100) according to any of the claims above, wherein the local device (210) comprises a local wavelength division multiplexing (WDM) (270) and a downlink light source (271), and the remote device (410) comprises a remote WDM (470) and a downlink optical receiver (471).

11. The wellbore fibre optical communication system (100) according to any of the claims above, wherein the local device (210) comprises a fibre optical sensing unit (280), a sensing transmit WDM (281) and a sensing receive WDM (282), wherein the sensing unit (280) is arranged for transmitting a first optical signal downhole to said polarization beam splitter (411) via said sensing transmit WDM (281), and further receiving said first optical signal via said receive WDM (282), wherein said optical sensing unit (280) is further arranged for analysing a change in a received first optical signal compared to said transmitted first optical signal.

## Patentansprüche

1. Faseroptisches Bohrloch-Kommunikationssystem (100), aufweisend:
- eine entfernte Einrichtung (410), eingerichtet zur Anordnung in einem Bohrloch, und
- eine lokale Einrichtung (210), eingerichtet zur Anordnung oberhalb des genannten Bohrloches, wobei die genannte lokale Einrichtung (210) eine Lichtquelle (211) und einen optischen Empfänger (212) aufweist, und wobei die genannte entfernte Einrichtung (410) aufweist:
- einen optischen Modulator (412), und
- eine Polarisationssteuereinrichtung (418) mit
- einem Polarisationsstrahlteiler (411), der eingerichtet ist für eine optische Verbindung mit der genannten Lichtquelle (211) über eine optische Faser (240) und zum Teilen einfallenden Lichtes von der genannten Lichtquelle (211) in erste und zweite Lichtsignale mit jeweiligen ersten und zweiten senkrechten Polarisationen (P1, P2), die an jeweilige erste und zweite Anschlüsse (421, 422) gegeben werden, und
- ein Polarisationsdrehelement (413), welches mit dem genannten ersten Anschluss (421) verbunden und eingerichtet ist zum Drehen des genannten ersten Lichtsignals in die genannte zweite Polarisation (P2),
- ein Polarisationshalteelement (414), welches an den genannten zweiten Anschluss (422) angeschlossen und eingerichtet ist zum Beibehalten der Polarisation (P2) des zweiten Lichtsignals in nicht-gedrehtem Zustand,
wobei die genannte Polarisationssteuereinrichtung (418) weiterhin eingerichtet ist, das genannte gedrehte erste Lichtsignal und das zweite, nicht-gedrehte Lichtsignal als Eingangslichtsignale in den genannten optischen Modulator (412) bereitzustellen, wobei der genannte optische Modulator (412) eingerichtet ist zum Empfangen eines Messsignals auf einem elektrischen Kabel (440) von einer Aufzeichnungseinrichtung (450) im Bohrloch und zum Modulieren des genannten Messsignals zur Bildung eines modulierten optischen Signals, und wobei das genannte faseroptische Bohrloch-Kommunikationssystem (100) eingerichtet ist für eine optische Verbindung und Übertragung des genannten modulierten optischen Signals von dem genannten optischen Modulator (412) zu dem genannten optischen Empfänger (212).

2. Faseroptisches Bohrloch-Kommunikationssystem (100) gemäß Anspruch 1, wobei das genannte gedrehte erste Lichtsignal und das genannte nicht-gedrehte zweite Lichtsignal auf jeweiligen ersten und zweiten optischen Modulatoranschlüssen (431, 432) des genannten optischen Modulators (412) bereitgestellt werden.

3. Faseroptisches Bohrloch-Kommunikationssystem (100) gemäß Anspruch 2, wobei die genannte lokale Einrichtung (210) einen optischen Zirkulator (213) aufweist, der verbunden ist mit der genannten Lichtquelle (211), dem genannten optischen Empfänger (212) und einem ersten Ende einer gemeinsamen optischen Faser (240), wobei der genannte erste optische Zirkulator (213) eingerichtet ist zum Leiten von Licht von der genannten Lichtquelle (211) in die genannte gemeinsame optische Faser (240) und zum Leiten von Licht von der genannten gemeinsamen optischen Faser (240) zu dem genannten optischen Empfänger (212), wobei ein zweites Ende der genannten gemeinsamen optischen Faser (240) mit dem genannten Polarisationsstrahlteiler (411) verbunden ist, wobei der genannte Strahlteiler (411) auch ein optischer Kombinierer ist, der eingerichtet ist zum Kombinieren eingehender optischer Signale an den genannten ersten und zweiten Anschlüssen (421, 422) in das genannte modulierte optische Signal auf der genannten optischen Faser (240).

4. Faseroptisches Bohrloch-Kommunikationssystem (100) gemäß Anspruch 1, aufweisend:
- einen optischen Koppler (419), der eingerichtet ist zum Kombinieren des genannten gedrehten ersten Lichtsignals und des genannten zweiten nicht-gedrehten Lichtsignals in ein kombiniertes Lichtsignal und zum Bereitstellen des genannten kombinierten Lichtsignals für einen ersten optischen Anschluss (431) des genannten optischen Modulators (412).

5. Faseroptisches Bohrloch-Kommunikationssystem (100) gemäß Anspruch 4, wobei der genannte optische Empfänger (212) eingerichtet ist für eine optische Verbindung über eine optische Faser mit einem zweiten optischen Anschluss (432) des genannten optischen Modulators (412) zum Übertragen des genannten modulierten optischen Signals am genannten zweiten optischen Anschluss (432) des Modulators zum genannten optischen Empfänger (212).

6. Faseroptisches Bohrloch-Kommunikationssystem (100) gemäß Anspruch 5, wobei der Polarisationsstrahlteiler (411) verbunden ist mit der genannten Lichtquelle (211) über eine erste optische Faser (241) und der genannte optische Empfänger (212) mit dem genannten zweiten optischen Anschluss (432) des Modulators über eine zweite optische Faser (242) verbunden ist.

7. Faseroptisches Bohrloch-Kommunikationssystem (100) gemäß einem der Ansprüche 4 bis 6, wobei die genannte lokale Einrichtung (210) einen ersten optischen Zirkulator (213) aufweist, der verbunden ist mit der genannten Lichtquelle (211), dem genannten optischen Empfänger (212) und einem ersten Ende einer gemeinsamen optischen Faser (240), wobei der genannte erste optische Zirkulator (213) eingerichtet ist zum Leiten von Licht von der genannten Lichtquelle (211) in die genannte gemeinsame optische Faser (240) und zum Leiten von Licht von der genannten gemeinsamen optischen Faser (240) zu dem genannten optischen Empfänger (212).

8. Faseroptisches Bohrloch-Kommunikationssystem (100) gemäß Anspruch 7, wobei die genannte entfernte Einrichtung (410) einen zweiten optischen Zirkulator (463) aufweist, der verbunden ist mit dem genannten Polarisationsstrahlteiler (111), dem genannten zweiten optischen Anschluss (432) des Modulators und einem zweiten Ende der genannten gemeinsamen optischen Faser (240), wobei der genannte zweite optische Zirkulator (163) eingerichtet ist zum Leiten von Licht von dem genannten zweiten optischen Anschluss (432) des Modulators in die genannte gemeinsame optische Faser (240) und zum Leiten von Licht von der genannten gemeinsamen optischen Faser (240) in den genannten Polarisationsstrahlteiler (411).

9. Faseroptisches Bohrloch-Kommunikationssystem (100) gemäß einem der vorhergehenden Ansprüche, wobei der optische Modulator (412) ein elektro-optischer Modulator ist.

10. Faseroptisches Bohrloch-Kommunikationssystem (100) gemäß einem der vorhergehenden Ansprüche, wobei die lokale Einrichtung (210) eine lokale Wellenlängenmultiplexierung (WDM) (270) und eine Abwärtslichtquelle (271) aufweist, und wobei die entfernte Einrichtung (410) ein entferntes WDM (270) aufweist und einen optischen Abwärtsempfänger (471).

11. Faseroptisches Bohrloch-Kommunikationssystem (100) gemäß einem der vorhergehenden Ansprüche, wobei die lokale Einrichtung (210) eine faseroptische Sensoreinheit (280), eine Sensor-Übertragungs-WDM (281) und eine Sensor-Empfangs-WDM (282) aufweist, wobei die Sensoreinheit (280) eingerichtet ist zum Übertragen eines ersten optischen Signals abwärts zum genannten Polarisationsstrahlteiler (411) über die genannte Sensor-Übertragungs-WDM (281), und zum Empfangen des genannten ersten optischen Signals über die genannte Empfangs-WDM (282), wobei die genannte optische Sensoreinheit (280) weiterhin eingerichtet ist zum Analysieren einer Änderung im empfangenen ersten optischen Signal im Vergleich zu dem genannten übertragenen ersten optischen Signal.

## Revendications

1. Système de communication de puits de forage à fibre optique (100) comprenant :
- un dispositif distant (410) configuré pour être agencé dans un puits de forage, et
- un dispositif local (210) configuré pour être agencé au-dessus du puits de forage,
ledit dispositif local (210) comprenant une source de lumière (211) et un récepteur optique (212),
dans lequel ledit dispositif distant (410) comprend :
- un modulateur optique (412), et
- un système de contrôle de la polarisation (418) comprenant :
- un séparateur de faisceau de polarisation (411) agencé pour une interconnexion optique avec ladite source de lumière (211) par le biais d'une fibre optique (240) et configuré pour séparer une lumière entrante provenant de ladite source de lumière (211) en un premier et un second signal lumineux avec une première et une seconde polarisation orthogonale respective (P1, P2) émises vers un premier et un second orifice respectif (421, 422), et
- un élément de rotation de polarisation (413) raccordé audit premier orifice (421) et configuré pour faire tourner ledit premier signal lumineux à ladite seconde polarisation (P2),
- un élément de maintien de polarisation (414) raccordé audit second orifice (422) et configuré pour maintenir la polarisation (P2) du second signal lumineux non mis en rotation,
dans lequel ledit système de contrôle de la polarisation (418) est en outre configuré pour fournir à la fois ledit premier signal lumineux mis en rotation et ledit second signal lumineux non mis en rotation comme des signaux lumineux d'entrée audit modulateur optique (412), ledit modulateur optique (412) étant agencé pour recevoir un signal de mesure sur un câble électrique (440) depuis un outil de diagraphie de fond (450) et moduler ledit signal de mesure en formant un signal optique modulé, et ledit système de communication de puits de forage à fibre optique (100) est agencé de façon à permettre une interconnexion optique et un transfert dudit signal optique modulé dudit modulateur optique (412) audit récepteur optique (212).

2. Système de communication de puits de forage à fibre optique (100) selon la revendication 1, dans lequel ledit premier signal lumineux mis en rotation et ledit second signal lumineux non mis en rotation sont fournis sur des premier et second orifices de modulateur optique respectifs (431, 432) dudit modulateur optique (412).

3. Système de communication de puits de forage à fibre optique (100) selon la revendication 2, dans lequel ledit dispositif local (210) comprend un circulateur optique (213) qui est raccordé à ladite source de lumière (211), ledit récepteur optique (212), et une première extrémité d'une fibre optique commune (240), dans lequel ledit premier circulateur optique (213) est configuré pour guider la lumière de ladite source de lumière (211) dans ladite fibre optique commune (240) et pour guider la lumière de ladite fibre optique commune (240) audit récepteur optique (212), dans lequel une seconde extrémité de ladite fibre optique commune (240) est raccordée audit séparateur de faisceau de polarisation (411), dans lequel ledit séparateur de faisceau (411) est également un combineur optique agencé pour combiner des signaux optiques entrants sur lesdits premier et second orifices (421, 422) en ledit signal optique modulé sur ladite fibre optique commune (240).

4. Système de communication de puits de forage à fibre optique (100) selon la revendication 1, comprenant un coupleur optique (419) agencé de façon à combiner ledit premier signal lumineux mis en rotation et ledit second signal lumineux non mis en rotation en un signal lumineux combiné, et à fournir ledit signal lumineux combiné à un premier orifice optique de modulateur (413) dudit modulateur optique (412).

5. Système de communication de puits de forage à fibre optique (100) selon la revendication 4, dans lequel ledit récepteur optique (212) est agencé de façon à permettre une interconnexion optique par le biais d'une fibre optique avec un second orifice optique de modulateur (432) dudit modulateur optique (412), afin de transférer ledit signal optique modulé sur ledit second orifice optique de modulateur (432) audit récepteur optique (212).

6. Système de communication de puits de forage à fibre optique (100) selon la revendication 5, dans lequel le séparateur de faisceau de polarisation (411) est interconnecté avec ladite source de lumière (211) par le biais d'une première fibre optique (241) et ledit récepteur optique (212) est interconnecté avec ledit second orifice optique de modulateur (432) par le biais d'une seconde fibre optique (242).

7. Système de communication de puits de forage à fibre optique (100) selon l'une quelconque des revendications 4 à 6, dans lequel ledit dispositif local (210) comprend un premier circulateur optique (213) raccordé à ladite source de lumière (211), ledit récepteur optique (212), et une première extrémité d'une fibre optique commune (240), dans lequel ledit premier circulateur optique (213) est configuré pour guider la lumière de ladite source de lumière (211) dans ladite fibre optique commune (240) et pour guider la lumière provenant de ladite fibre optique commune (240) vers ledit récepteur optique (212).

8. Système de communication de puits de forage à fibre optique (100) selon la revendication 7, dans lequel ledit dispositif distant (410) comprend un second circulateur optique (463) raccordé audit séparateur de faisceau de polarisation (411), ledit second orifice optique de modulateur (432) et une seconde extrémité de ladite fibre optique commune (240), dans lequel ledit second circulateur optique (463) est configuré pour guider la lumière dudit second orifice optique de modulateur (432) dans ladite seconde fibre optique commune (240) et pour guider la lumière de ladite fibre optique commune (240) dans ledit séparateur de faisceau de polarisation (411).

9. Système de communication de puits de forage à fibre optique (100) selon l'une quelconque des revendications précédentes, dans lequel le modulateur optique (412) est un modulateur électro-optique.

10. Système de communication de puits de forage à fibre optique (100) selon l'une quelconque des revendications précédentes, dans lequel le dispositif local (210) comprend un multiplexeur de longueur d'onde local (WDM) (270) et une source de lumière à liaison descendante (271), et
le dispositif distant (410) comprend un WDM distant (470) et un récepteur optique à liaison descendante (471).

11. Système de communication de puits de forage à fibre optique (100) selon l'une quelconque des revendications précédentes, dans lequel le dispositif local (210) comprend une unité de détection à fibre optique (280), un WDM de transmission de détection (281) et un WDM de réception de détection (282), dans lequel l'unité de détection (280) est agencée de façon à transmettre un premier signal optique en fond de trou audit séparateur de faisceau de polarisation (411) par le biais dudit WDM de transmission de détection (281), et à recevoir en outre ledit premier signal optique par le biais dudit WDM de réception (282), dans lequel ladite unité de détection optique (280) est en outre agencée pour analyser un changement du premier signal optique reçu par rapport audit premier signal optique transmis.
